# EUROPEAN PATENT APPLICATION

(11) **EP 4 610 616 A1**
(43) Date of publication of application: **03.09.2025**
(21) Application number: 25160407.0
(22) Date of filing: 26.02.2025
(51) Int. Cl.: G01M 11/00, G06N 20/00, H04B 10/07

(54) **FIBER TESTING USING MACHINE LEARNING**

(30) Priority: 28.02.2024 US 202418590446
(71) Applicant: Viavi Solutions Inc., Chandler, AZ 85286 (US)
(72) Inventor: KENNOUCHE, Eddine, 38240 Meylan (FR)
(74) Representative: Murgitroyd & Company

(57) **Abstract**

In some implementations, a fiber testing system may obtain data associated with a fiber testing operation performed by a fiber testing device. The data may include at least one of metadata or trace data associated with the fiber testing operation. The metadata may include at least one of a context, a description, a date, a timestamp, or an identifier associated with the fiber testing operation, and the trace data may include at least one of a loss measurement or an optical time domain reflectometer measurement associated with the fiber testing operation. The fiber testing system may generate, based on the data, a signature that identifies a fiber associated with the fiber testing operation.

## Description

### FIELD

This disclosure relates to a method, device and non-transitory computer-readable medium for fiber testing using machine learning.

### BACKGROUND

Fiber testing is a process for measuring and evaluating the performance and reliability of fibers (for example, fiber cables). The process may involve using fiber testing devices for measuring key parameters such as signal loss, light transmission quality, and the integrity of fiber connections, among other examples. Fiber testing may include an attenuation measurement that assesses the reduction in signal strength along the fiber and/or may include a reflectometry test that identifies faults, bends, and splices in the fibers. These evaluations may be critical for ensuring that the measured fibers satisfy industry standards, are able to deliver a reliable communication service with required performance metrics, are able to perform fiber sensing operations, and/or the like.

### SUMMARY

According to an aspect, there is provided a method, comprising:
obtaining data associated with a fiber testing operation performed by a fiber testing device, wherein the data includes at least one of metadata or trace data associated with the fiber testing operation, wherein the metadata includes at least one of a context, a description, a date, a timestamp, or an identifier associated with the fiber testing operation, and the trace data includes at least one of a loss measurement or an optical time domain reflectometer, OTDR, measurement associated with the fiber testing operation; and
generating, based on the data, a signature that identifies a fiber associated with the fiber testing operation.

In one embodiment, the signature that identifies the fiber is an invariant signature that identifies the fiber in accordance with the data being associated with a plurality of test conditions.

In one embodiment, the signature that identifies the fiber has a dimensionality that satisfies at least one of a performance requirement, a latency requirement, or a storage requirement.

In one embodiment, the method further comprises:
generating a machine learning model; and
training the machine learning model using a fiber testing training dataset, wherein generating the signature using the machine learning operation comprises generating the signature using a machine learning operation that is performed by the machine learning model.

In one embodiment, the method further comprises identifying, based on a similarity between the signature associated with the fiber testing operation and another signature associated with another fiber testing operation, that the fiber testing operation and the other fiber testing operation are associated with the same fiber.

In one embodiment, the method further comprises deleting one or more fiber testing operation records based on a similarity between two or more fiber testing operation records of a plurality of fiber testing operation records.

In one embodiment, the method further comprises:
processing a plurality of fiber testing operation records;
identifying that a fiber testing operation record and another fiber testing operation record are repeated test records, wherein the other fiber testing operation record is included in the plurality of fiber testing operation records or is included in a plurality of stored fiber testing operation records; and
deleting the fiber testing operation record based on the fiber testing operation record and the other fiber testing operation record being the repeated test records.

In one embodiment, the method further comprises:
training a machine learning model for generating the signature; and
identifying, in real time and using the machine learning model, one or more fiber testing operation records of a plurality of fiber testing operation records corresponding to a repeated test record.

In one embodiment, the method further comprises identifying a similarity between a first fiber testing operation record and a second fiber testing operation record based on a first signature associated with the first fiber testing operation record and a second signature associated with the second fiber testing operation record.

In one embodiment, the method further comprises:
storing a plurality of signatures associated with a plurality of respective fiber testing operations; and
identifying, based on the plurality of signatures, one or more signatures having one or more characteristics that are outside of a range of fiber testing operation characteristics.

In one embodiment, the method further comprises generating the signature that identifies the fiber comprises generating the signature using an embedded processing device, a processing device that is integrated into another device, an edge device, or a server that is accessible via one or more interfaces.

In one embodiment, the method further comprises sending, to another device, a fiber testing operation result associated with the fiber testing operation.

In one embodiment, the method further comprises:
analyzing a plurality of fiber testing operation records; and
triggering a test process based on detecting one or more anomalies, similarities, repeated test records, or outliers associated with the plurality of fiber testing operation records.

According to another aspect, there is provided a device for wireless communication, comprising:
one or more memories; and
one or more processors, coupled to the one or more memories, configured to cause the device to:
   obtain data associated with a fiber testing operation, wherein the data includes at least one of metadata or trace data associated with the fiber testing operation, wherein the metadata includes at least one of a context, a description, a date, a timestamp, or an identifier associated with the fiber testing operation and the trace data includes at least one of a loss measurement or an optical time domain reflectometer, OTDR, measurement associated with the fiber testing operation; and
   generate, based on the data, a signature that identifies a fiber associated with the fiber testing operation.

In one embodiment the signature that identifies the fiber has a dimensionality that satisfies at least one of a performance requirement, a latency requirement, or a storage requirement.

In one embodiment the signature that identifies the fiber is an invariant signature that identifies the fiber in accordance with the data being associated with a plurality of test conditions.

In one embodiment, the one or more processors are further configured to cause the device to delete one or more fiber testing operation records based on a similarity between two or more fiber testing operation records of a plurality of fiber testing operation records.

According to a further aspect, there is provided a non-transitory computer-readable medium storing a set of instructions for wireless communication, the set of instructions comprising:
one or more instructions that, when executed by one or more processors of a device, cause the device to:
obtain data associated with fiber testing operation, wherein the data includes at least one of metadata or trace data associated with the fiber testing operation, wherein the metadata includes at least one of a context, a description, a date, a timestamp, or an identifier associated with the fiber testing operation and the trace data includes at least one of a loss measurement or an optical time domain reflectometer, OTDR, measurement associated with the fiber testing operation; and
generate, based on the data, a signature that identifies a fiber associated with the fiber testing operation.

**In** one embodiment the signature that identifies the fiber is an invariant signature that identifies the fiber in accordance with the data being associated with a plurality of test conditions.

**In** one embodiment the signature that identifies the fiber has a dimensionality that satisfies at least one of a performance requirement, a latency requirement, or a storage requirement.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

Figs. 1A-1E are diagrams of example implementations associated with fiber testing using machine learning.
Fig. 2 is a diagram of an example environment in which systems and/or methods described herein may be implemented.
Fig. 3 is a diagram of example components of a device associated with fiber testing using machine learning.
Fig. 4 is a flowchart of an example process associated with fiber testing using machine learning.

### DETAILED DESCRIPTION

The following detailed description of example implementations refers to the accompanying drawings. The same reference numbers in different drawings may identify the same or similar elements.

Fiber testing may be performed by at least one fiber testing device. The fiber testing device may perform a fiber testing operation in order to measure a plurality of fibers (such as fiber cables). The fiber testing device may output a fiber report that is based on the fiber testing operation. The fiber testing report may indicate, for example, whether one or more fibers indicated in the fiber report has a splice, connector, or bend issue and/or may indicate any link loss or link distance associated with the fiber. In some cases, a fiber testing system associated with the one or more fiber testing device may manage a large quantity (for example, thousands) of fiber reports each day. This may increase a likelihood of errors that occur during fiber testing and analysis. For example, managing a large quantity of fiber testing reports may reduce a likelihood that each report is evaluated in detail and/or may reduce a quality of the evaluations performed for the fiber testing reports. In some cases, different fiber testing devices or fiber testing systems may use different identifiers for identifying fibers that have been tested by the fiber testing device. In some cases, one or more identifiers for identifying fibers may be erroneous owing to unintentional mistakes or deliberate manipulation. These factors may increase a difficulty in identifying whether a fiber has been tested and/or may increase a difficulty in determining a quality of the fiber testing report, particularly when the quantity of fibers included in the fiber testing report is large. In some cases, a fiber may have been tested multiple times by a fiber testing device (or by different fiber testing devices), which may lead to multiple fiber testing reports for the fiber (also referred to herein as "repeated fiber reports" and "repeated test records"). However, it may not be easy to identify repeated fiber reports associated with the same fiber due to the large quantity of fibers tested, the large size of metadata and/or trace data comprising a single fiber test report, the variation in size of metadata and/or trace data between different fiber test report, and/or the different identifiers used to identify the fiber.

Some implementations described herein enable fiber testing using machine learning. In some implementations, a fiber testing system may obtain data associated with a fiber testing operation performed by at least one fiber testing device. The data may include at least one of metadata or trace data associated with the fiber testing operation. Metadata associated with the fiber testing operation may include a context, a description, a date, a timestamp, or an identifier, among other examples, associated with the fiber testing operation. Trace data associated with the fiber testing operation may include at least one of a loss measurement or an optical time domain reflectometer (OTDR) measurement, among other examples, associated with the fiber testing operation. The fiber testing system may generate and/or test a machine learning model (also referred to herein as an "ML model") for analyzing the fiber testing operation. In some implementations the machine learning model may be an autoencoder, a variational autoencoder, a principle component analysis, a uniform manifold approximation and projection, an isometric mapping, a linear discriminant mapping, and/or the like. The fiber testing system may use the machine learning model to generate a signature that identifies the fiber associated with the fiber testing operation. The signature may uniquely identify each fiber associated with the fiber testing operation. In some examples, the signature may be a signature that is invariant to one or more test conditions, in that the signature identifies the fiber in accordance with the data being associated with a plurality of test conditions. The signature may have a dimensionality that satisfies at least one of a performance requirement, a latency requirement, or a storage requirement. The signature may improve a likelihood that the fiber is properly identified in the fiber testing report, may reduce a likelihood of multiple fiber reports being generated for the same fiber, and/or may allow the identification of distinct fiber reports that are identified as corresponding to different fibers but are in fact corresponding to the same fiber. In some examples, the signature may increase suspect data detection by the fiber testing system, may increase a quantity of fibers that are able to be analyzed by the fiber testing system, may reduce a time period that is required for analyzing the fiber testing results, and/or may enable the fiber testing system to test fibers in high-variability testing conditions using raw data for a large quantity of customers. These example advantages, among others, are described in detail below.

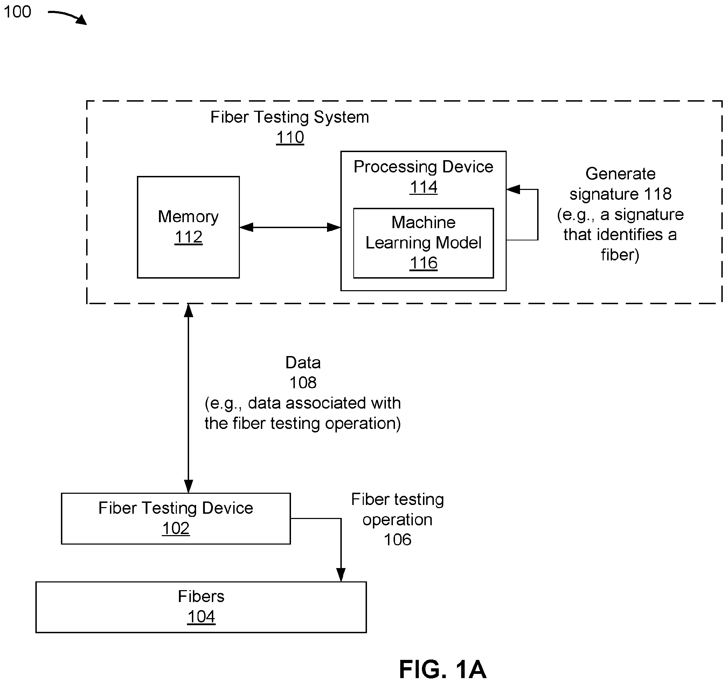

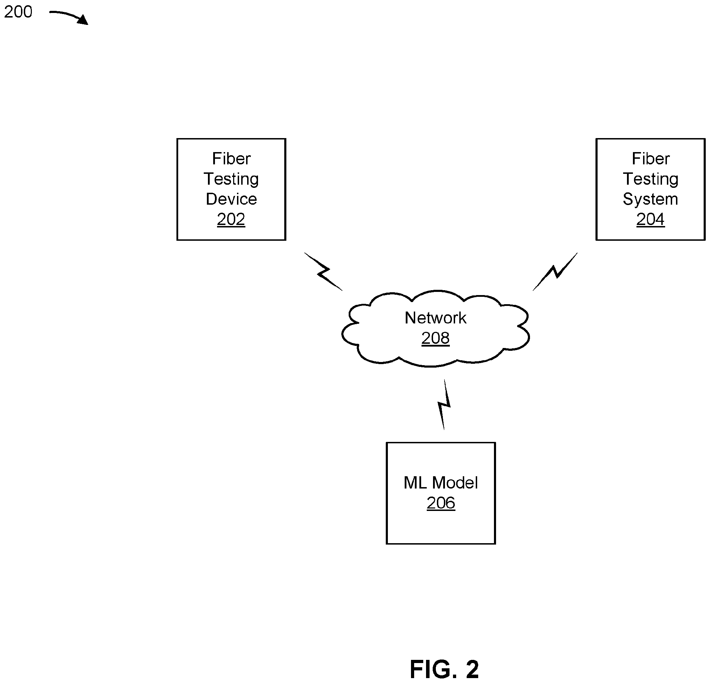

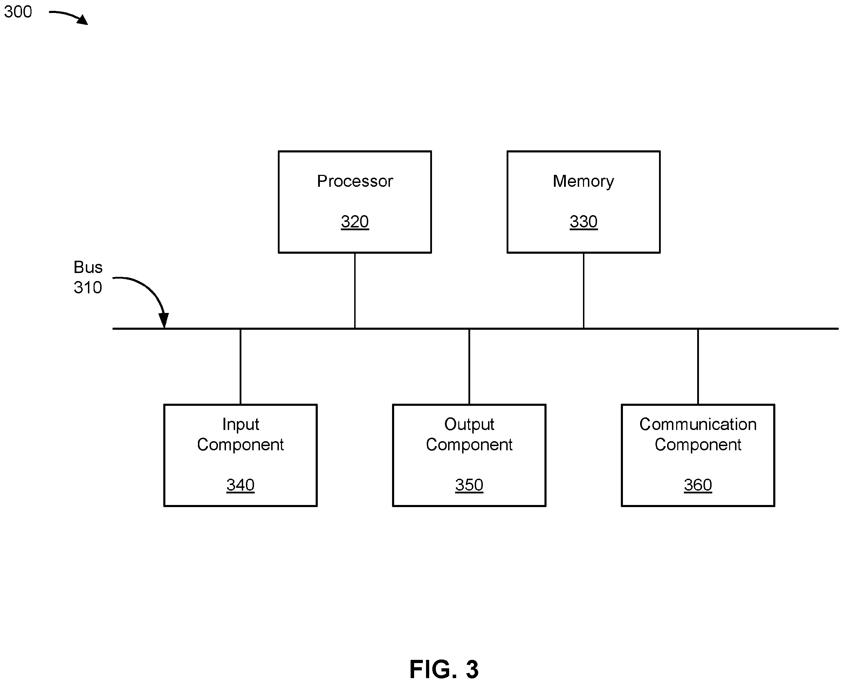

Figs. 1A-1E are diagrams of example implementations associated with fiber testing using machine learning. As shown in Figs. 1A-1E, example implementation 100 includes a fiber testing device 102, a fiber testing system 110, and a machine learning model 116. These are described in more detail below in connection with Fig. 2 and Fig. 3.

As shown in Fig. 1A and example 100, a fiber testing device 102 may be configured to test a plurality of fibers 104. The fiber testing device 102 may be, for example, an OTDR, an optical power meter, a light source, an optical loss test set (OLTS), a fiber inspection scope, and/or any device that is configured to perform fiber testing. The fibers 104 may be any fibers (such as optical fibers) that are included in a computing or networking device. The fiber testing device 102 may perform a fiber testing operation 106 to test one or more of the fibers 104. In some examples, performing the fiber testing operation 106 may include testing a large quantity of fibers 104 (such as hundreds or thousands of fibers). The fiber testing device 102 may provide data 108 to a fiber testing system 110. The data 108 may be any data associated with the fiber testing operation. The data 108 may be included in a test record (for example, a fiber test record). In some examples, the data may include at least one of metadata or trace data resulting from the fiber testing operation 106. The metadata may be, for example, JavaScript Object Notation (JSON)-based metadata that includes context, descriptions, dates, timestamps, or identifiers, among other examples. The trace data may be, for example, measured trace data that includes loss measurements or OTDR measurements, among other examples.

In some implementations, the fiber testing device 102 may pre-process the data 108 (e.g., the trace data and/or the metadata) to extract additional features and/or to transform the data 108 to a different representation to be provided as input to a machine learning model. For example, the fiber testing device 102 may perform a fast Fourier transformation of the OTDR trace data to extract frequency components. In some implementations, the pre-processed data may be provided as input to the machine learning model instead of the raw test data. In some implementations, the pre-processed data may be provided as input to the machine learning model jointly with the test data.

In some examples, the fiber testing device 102 may be included in the fiber testing system 110. In some other examples, the fiber testing system 110 may be included in the fiber testing device 102. In some other examples, the fiber testing device 102 and the fiber testing system 110 may be included in the same device. In some other examples, the fiber testing device 102 and the fiber testing system 110 may be separate devices that communicate using wired or wireless communications. The fiber testing system 110 may include a memory 112 and a processing device 114. The processing device 114 may include a machine learning model 116. The fiber testing system 110 (for example, using the processing device 114 and/or the machine learning model 116) may obtain the data 108 associated with the fiber testing operation. The fiber testing system 110 (for example, using the processing device 114 and/or the machine learning model 116) may generate a signature 118 based on the data 108. The signature 118 may identify a fiber associated with the fiber testing operation 106. For example, the signature 118 may uniquely identify a fiber that is tested by the fiber testing device 102 during the fiber testing operation 106. In some examples, the fiber testing system 110 may generate a plurality of signatures, where each signature of the plurality of signatures corresponds to a fiber that is tested during the fiber testing operation 106. In some examples, the signature 118 may be a compact representation of data associated with the fiber, such as a lower-dimensionality representation of the data associated with the fiber. The signature 118 may be based on various instrument trace data, configurations, and test conditions for the fiber.

In some implementations, the fiber testing system 110 may obtain data associated with a fiber (for example, data related to an instrument-based test, such as an OTDR test, performed on the fiber) and may generate an invariant signature (e.g., a signature that is invariant to one or more test conditions) that may be utilized to help to uniquely identify the fiber. The fiber testing system 110 may generate an invariant signature that uniquely identifies the fiber even if the raw data embodies different test conditions. In some implementations, the fiber testing system 110 may generate the signature using a dimensionality reduction method that satisfies a performance requirement, a latency requirement, or a storage requirement, among other examples. In some examples, the signature 118 may be a plurality of variables such as a vector. In other examples, the signature 118 may be a scalar variable. In other examples, the signature may be a matrix.

In some implementations, the fiber testing system 110 may generate and/or train the ML model 116 such that the ML model 116 is able to generate the signature(s) after being exposed to a training dataset that includes test data. The ML model 116 may be configured to generate signatures "en mass" for existing test records. The generated signatures may be stored separately from the raw data, which may improve data storage and performance by the fiber testing system 110. In some implementations, the signatures 118 may be used for analyzing the test data (rather than the raw data, which is more complex than the signatures 118).

In some implementations, the signatures 118 may be used to identify repeated test records. Two (or more) test records may be considered to be repeats in accordance with corresponding signatures for the test records having a similarity that is greater than a similarity threshold. The fiber testing system 110 may identify and/or flag repeated test records (e.g., multiple test records for a same fiber) in order to reduce the quantity of test records stored by the fiber testing system 110, to increase a likelihood of test records being correctly identified (e.g., as a result of an automated process, by a technician, and/or the like), and/or to increase a likelihood of falsified test records being detected. In some implementations, the fiber testing system 110 may be configured to parse a large quantity of test records, identify repeated test records that are repeated, and to delete one or more of the repeated test records from the fiber testing system 110. In some implementations, the fiber testing system 110 may be configured to process a batch of test records (for example, simultaneously or nearly simultaneously) and to identify whether any test records in the batch of test records are repeated test records stored in the fiber testing system 110. In some implementations, the fiber testing system 110 may be configured to deploy the ML model 116 to generate the signatures 118. The ML model 116 can be deployed to receive incoming test records in real-time and to flag test records that are repeated test records in real-time.

In some implementations, the fiber testing system 110 may be configured to determine a similarity of test records. For example, in addition (or alternatively) to identifying repeated test records using the signature 118, the fiber testing system 110 may be configured to quantify a similarity of the test records using the signature 118. In some implementations, the fiber testing system 110 may use the signature 118 to determine a similarity of the test records, for example, by measuring a distance in a vector space in which the signatures are represented. The distance may be a distance metric having, for example, a Euclidian value, a Cosine value, or a Minkowski value, among other examples. The similarity of the test records may be a function of the distance metric. In some implementations, a lower distance metric between two signatures corresponds to the two signatures being more similar. In some implementations, groups of two or more similar signatures may be found in a multiplicity of signatures using clustering, k-d tree, hierarchical density-based spatial clustering of applications with noise, Cuda Anns GRAph-base (CAGRA), exhaustive search and/or the like. Hence the distance metric may be used to analyze test records to detect repeated test records, identify patterns, find clusters, and/or the like.

In some implementations, the fiber testing system 110 may store the signatures 118 in a database. For example, the fiber testing system 110 may store a plurality of signatures 118 in a database that is included in the memory 112, where each signature 118 of the plurality of signatures 118 corresponds to a fiber test result. The fiber testing system 110 may analyze the signatures 118 to identify test records that are outside of a range of test data (for example, a range of normal test data). The fiber testing system 110 may for example identify and/or flag test records that are outside of a range in order to identify fiber tests that have failed to meet quality standards and/or have been performed by faulty testing device 102. A signature 118 may be considered to be outside of the range of test data, for example, in accordance with the signature 118 being different from the signatures corresponding to the range of test data by an amount that satisfies (e.g., is greater than, less than, and/or equal to) a difference threshold. In some examples, fiber testing system 110 may identify one or more test data outliers using an unsupervised clustering that is applied to the test data signatures.

In some implementations, the fiber testing system 110 (and/or the ML model 116) may be deployed on a cloud device (with or without acceleration) (for example, using a graphics processing unit (GPU)), an edge device, or an embedded device, may be integrated into other software, and/or may be deployed on a server that is accessible via an interface (such as an application programming interface (API)). In some implementations, the fiber testing system 110 may provide the test records to a test process automation function. The test process automation function may be configured to receive the test records and to review the test records, to generate and/or store the signature 118, and/or to flag any similarities, repeats, outliers, and/or anomalies, among other examples, in the test records. In some implementations, the fiber testing system 110 and/or the automation function may be configured to trigger a test process automation (TPA) function, procedure, and/or other operation in accordance with detecting the similarities, repeated test records, outliers, and/or anomalies in the test records.

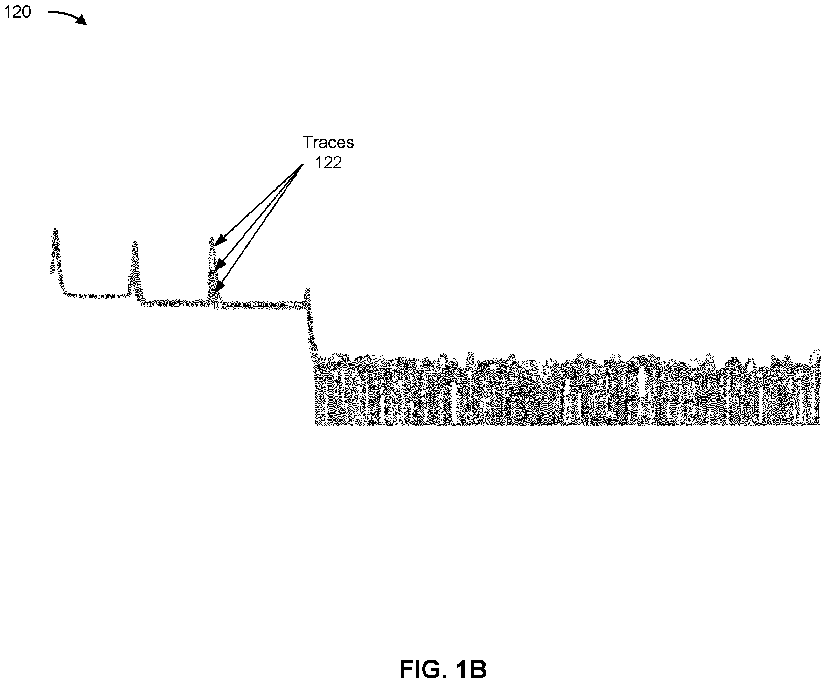

As shown in Fig. 1B and example 120, a single fiber may be associated with a plurality of traces 122. The plurality of traces 122 may be generated in accordance with the same instrument (and/or multiple instruments) performing multiple tests on the fiber. The fiber may have changing traces due to changing conditions, such as due to an aging of the fiber. In some cases, a user may be able to identify a similarity in the plurality of traces 122 and to detect that the plurality of traces 122 are repeated tests of the same fiber. However, this process may be tedious to perform, particularly when there are a large number of traces and/or a large number of fibers. For example, the user may need to look at noise patterns, events, and each single point in the data for each fiber in order to detect repeated test records.

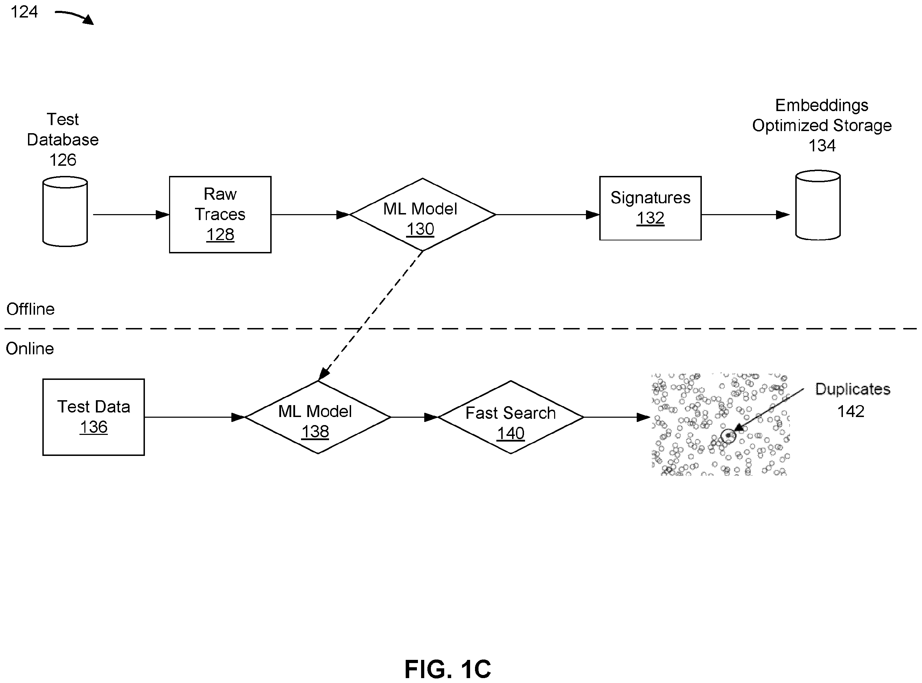

As shown in Fig. 1C and example 124, the fiber testing system (for example, using the ML model) may be configured to perform repeat identification. For example, the fiber testing system may perform fast-search repeat identification. While in an offline mode, the fiber testing system may obtain, from a test database 126, raw traces 128. The raw traces 128 may be associated with fiber tests performed on one or more fibers. The fiber testing system may generate and/or train the ML model 130 using the raw traces 128. The fiber testing system and/or the ML model may generate a plurality of signatures 132 based on the raw traces 128. The fiber testing system may store the plurality of signatures in an embeddings optimized storage 134. While in an online mode, the fiber testing system may obtain test data 136 and may input the test data 136 into the ML model 138. The ML model 138 may be the same as the ML model 130. For example, ML model 138 and ML model 130 may be separate instances of an ML model that utilize the same weights, biases, and/or the like. The fiber testing system and/or the ML model 138 may perform a fast search 140 using the test data 136 and/or the signatures generated from the ML model 130 and/or 138. The fiber testing system may detect one or more repeated test records 142 based on an output of the fast search 140. In one example, the fiber testing system may obtain a large quantity of trace files (such as hundreds of thousands of trace files) from a customer (e.g., from a device associated with a customer). The fiber testing system may use the ML model to detect if an incoming trace is a repeat of a stored trace or is similar to a stored trace, even if the trace has some additional noise. The fiber testing system and/or the ML model may detect the repeated or similar traces using the fast search 140. In some examples, this may be performed on trace data coming from a different network than the one that generated the training data, in which case the ML model may not need re-training.. This may be performed for fibers having any length and fibers having variable lengths.

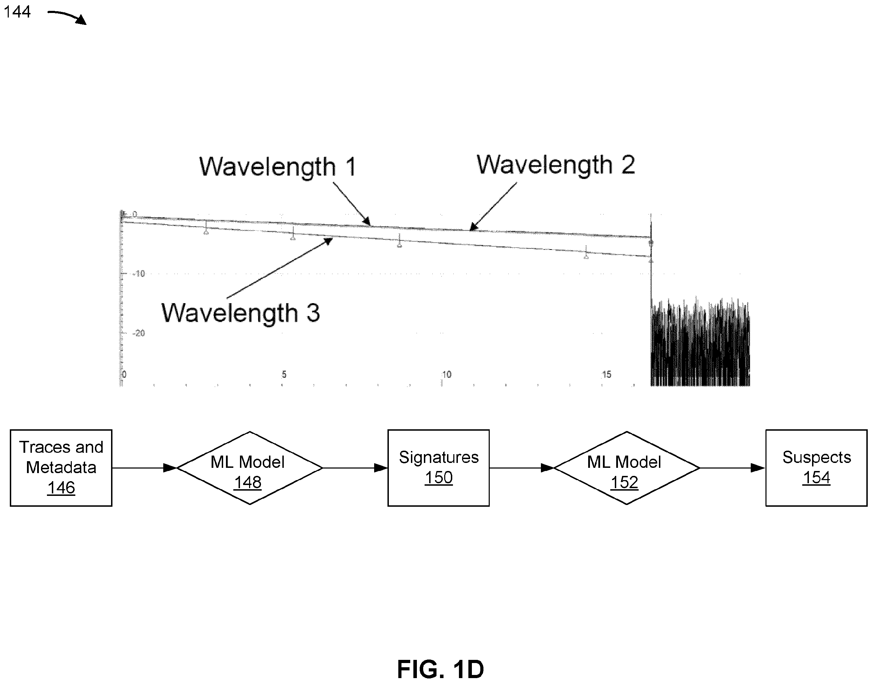

As shown in Fig. 1D and example 144, a fiber testing system may perform fiber testing with a multiplicity of wavelengths. In some cases, fiber testing may be performed with two or more wavelengths to increase resolution of characteristics, resolve features at different distances, and/or to compensate for nonlinear effects, for example. In some cases, a technician may perform repeated tests of the same fiber using different wavelengths owing to a mistake, error, and/or the like. In some cases, tests on the same fiber performed with different wavelengths may generate traces that are similar to each other. For example, traces from a first wavelength (Wavelength 1), a second wavelength (Wavelength 2) and a third wavelength (Wavelength 3) may be similar. Therefore, trace signatures based on the traces from the different wavelengths may also be similar. A fiber testing system may obtain traces and metadata 146 as inputs to an ML model 148. The ML model 148 may output signatures 150 based on the traces and metadata 146. In some cases, the ML model 148 may be created such that the degree of similarity of the resulting signatures is invariant to, and/or less sensitive to the wavelength used for the fiber testing. ML model 152 (which may be a different or a same ML model as ML model 140) may obtain the signatures 150 as an input and may output suspects 154 based on the signatures. ML modeling may incorporate this information when generating signatures (and/or other information) to increase the quality of the signatures. In this way the fiber testing system may yield a low distance metric between signatures generated from traces from the same fiber regardless of the wavelengths used to generate each trace. Thus, the ability to quantify similarity, detect repeated test records, identify outliers, and/or detect clusters for example, in cases where a multiplicity of wavelengths is used for fiber tests may be increased.

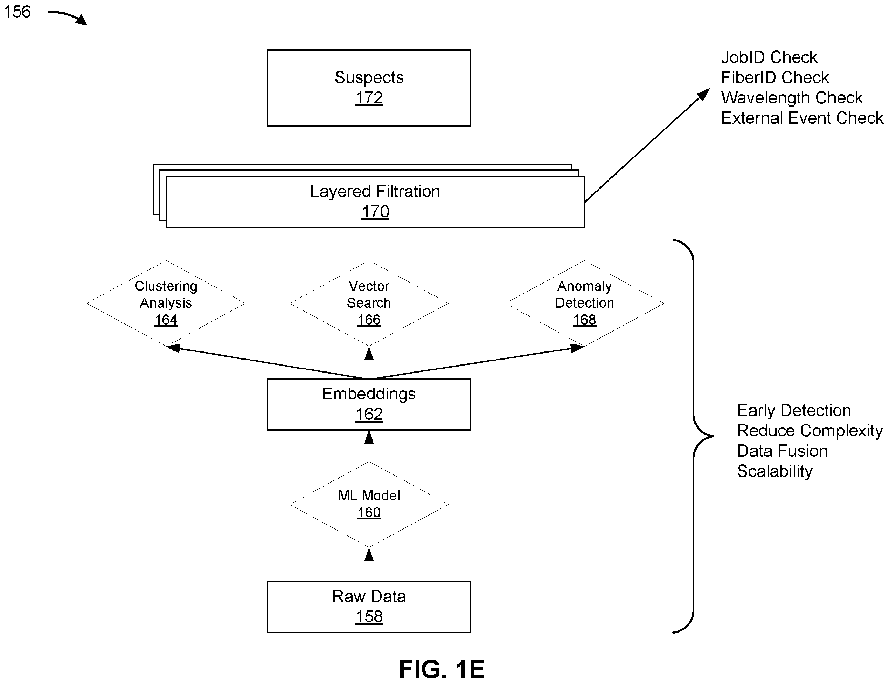

As shown in Fig. 1E and example 156, a fiber testing system may identify outliers and suspect data. The fiber testing system may obtain raw data 158 as an input to an ML model 160. The ML model 160 may generate one or more signatures 162 based on the raw data 158. The fiber testing system (for example, using the ML model) may perform one or more of a clustering analysis 164, a vector search 166, and an anomaly detection 168 based on the signatures 162. This may enable the fiber testing system to perform early detection of patterns, for example of outliers, repeated test records, and/or similar test records, reduce complexity of the test records, perform data fusion of the trace data with one or more metadata attributes, and/or test the ML model for deployment requirements such as scalability. The fiber testing system may perform a layered filtration 170 based on output(s) from the clustering analysis 164, the vector search 166, and/or the anomaly detection 168. The fiber testing model may identify one or more suspects 172 based on the layered filtration 170. In some examples, the fiber testing system may perform the layered filtration 170 using a job identifier (ID) (JobID) check, a fiber ID (FiberID) check, a wavelength check, and/or an external event check. This process may be slower (for example, slower than the fast-search) but may enable more accurate detection of the suspects.

As described herein, the fiber testing system 110 may use the ML model 116 to generate a signature 118 that identifies a fiber associated with the fiber testing operation 106. The signature 118 may uniquely identify each fiber associated with the fiber testing operation 106. In some examples, the signature 118 may be an invariant signature that identifies the fiber in accordance with the data being associated with a plurality of test conditions. The signature 118 may have a dimensionality that satisfies at least one of a performance requirement, a latency requirement, or a storage requirement. The signature 118 may improve a likelihood that the fiber is properly identified in the fiber testing report, may reduce a likelihood of multiple fiber reports being generated for the same fiber and/or may facilitate the identification of cases where multiple fiber reports have been generated for the same fiber. In some examples, the signature may increase suspect data detection by the fiber testing system 110, may increase a quantity of fibers that are able to be analyzed by the fiber testing system 110, may reduce a time period that is required for analyzing the fiber testing results, and/or may enable the fiber testing system 110 to test fibers in high-variability testing conditions using raw data for a large quantity of customers, fiber networks, fiber deployment architectures and/or the like.

As indicated above, Figs. 1A-1E are provided as an example. Other examples may differ from what is described with regard to Figs. 1A-1E. The number and arrangement of devices shown in Figs. 1A-1E are provided as an example. In practice, there may be additional devices, fewer devices, different devices, or differently arranged devices than those shown in Figs. 1A-1E. Furthermore, two or more devices shown in Figs. 1A-1E may be implemented within a single device, or a single device shown in Figs. 1A-1E may be implemented as multiple, distributed devices. Additionally, or alternatively, a set of devices (e.g., one or more devices) shown in Figs. 1A-1E may perform one or more functions described as being performed by another set of devices shown in Figs. 1A-1E.

Fig. 2 is a diagram of an example environment 200 in which systems and/or methods described herein may be implemented. As shown in Fig. 2, environment 200 may include a fiber testing device 202, a fiber testing system 204, an ML model 206, and a network 208. Devices of environment 200 may interconnect via wired connections, wireless connections, or a combination of wired and wireless connections.

The fiber testing device 202 may be configured to test a plurality of fibers. The fiber testing device 202 may be, for example, an OTDR, an optical power meter, a light source, an OLTS, a fiber inspection scope, and/or any device that is configured to perform fiber testing. The fiber testing device 202 may perform a fiber testing operation to test one or more of the fibers. The fiber testing device 202 may provide data associated with the fiber testing operation to the fiber testing system 204. The data may include at least one of metadata (such as JSON-based metadata that includes context, descriptions, dates, timestamps, or identifiers) or trace data (such as measured trace data that includes loss measurements or OTDR measurements).

In some implementations, the fiber testing device 202 may be included in the fiber testing system 204. In some other implementations, the fiber testing system 204 may be included in the fiber testing device 202. In some other implementations, the fiber testing device 202 and the fiber testing system 204 may be included in the same device. In some other implementations, the fiber testing device 202 and the fiber testing system 204 may be separate devices that communicate using the network 208.

The fiber testing system 204 may obtain the data associated with the fiber testing operation. The fiber testing system 204 may generate a signature based on the data associated with the fiber testing system 204. The signature may identify a fiber that is tested during the fiber testing operation. For example, the signature may uniquely identify a fiber that is tested by the fiber testing device 202 during the fiber testing operation. In some examples, the fiber testing system 204 may generate a plurality of signatures, where each signature of the plurality of signatures corresponds to a fiber that is tested during the fiber testing operation.

The ML model 206 may obtain the data associated with the fiber testing operation and may generate the signature based on the data associated with the fiber testing system 204. In some implementations, the ML model 206 may be included in the fiber testing system 204 for generating the signature based on the data. In some other implementations, the ML model 206 may communicate with the fiber testing system 204 (for example, using the network 208) to enable the fiber testing system 204 to generate the signatures based on the data.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with fiber testing using machine learning. The device 300 may correspond to the fiber testing device 202, the fiber testing system 204, and/or the ML model 206. In some implementations, the fiber testing device 202, the fiber testing system 204, and/or the ML model 206 may include one or more devices 300 and/or one or more components of the device 300. As shown in Fig. 3, the device 300 may include a bus 310, a processor 320, a memory 330, an input component 340, an output component 350, and/or a communication component 360.

The bus 310 may include one or more components that enable wired and/or wireless communication among the components of the device 300. The bus 310 may couple together two or more components of Fig. 3, such as via operative coupling, communicative coupling, electronic coupling, and/or electric coupling. For example, the bus 310 may include an electrical connection (e.g., a wire, a trace, and/or a lead) and/or a wireless bus. The processor 320 may include a central processing unit, a graphics processing unit, a microprocessor, a controller, a microcontroller, a digital signal processor, a field-programmable gate array, an application-specific integrated circuit, and/or another type of processing component. The processor 320 may be implemented in hardware, firmware, or a combination of hardware and software. In some implementations, the processor 320 may include one or more processors capable of being programmed to perform one or more operations or processes described elsewhere herein.

The memory 330 may include volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 may store information, one or more instructions, and/or software (e.g., one or more software applications) related to the operation of the device 300. In some implementations, the memory 330 may include one or more memories that are coupled (e.g., communicatively coupled) to one or more processors (e.g., processor 320), such as via the bus 310. Communicative coupling between a processor 320 and a memory 330 may enable the processor 320 to read and/or process information stored in the memory 330 and/or to store information in the memory 330.

The input component 340 may enable the device 300 to receive input, such as user input and/or sensed input. For example, the input component 340 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 350 may enable the device 300 to provide output, such as via a display, a speaker, and/or a light-emitting diode. The communication component 360 may enable the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a non-transitory computer-readable medium (e.g., memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

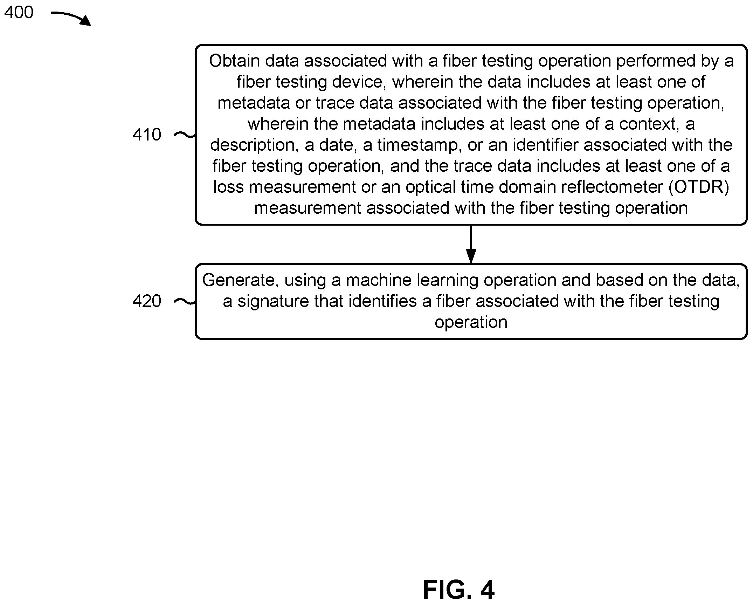

Fig. 4 is a flowchart of an example process 400 associated with fiber testing using machine learning. In some implementations, one or more process blocks of Fig. 4 are performed by a fiber testing system (e.g., fiber testing system 110). In some implementations, one or more process blocks of Fig. 4 are performed by another device or a group of devices separate from or including the fiber testing system, such as the fiber testing device 102 and/or the machine learning model 116. Additionally, or alternatively, one or more process blocks of Fig. 4 may be performed by one or more components of device 300, such as processor 320, memory 330, input component 340, output component 350, and/or communication component 360.

As shown in Fig. 4, process 400 may include obtaining data associated with a fiber testing operation performed by a fiber testing device, wherein the data includes at least one of metadata or trace data associated with the fiber testing operation, wherein the metadata includes at least one of a context, a description, a date, a timestamp, or an identifier associated with the fiber testing operation, and the trace data includes at least one of a loss measurement or an OTDR measurement associated with the fiber testing operation (block 410). For example, the fiber testing system may obtain data associated with a fiber testing operation performed by a fiber testing device, wherein the data includes at least one of metadata or trace data associated with the fiber testing operation, wherein the metadata includes at least one of a context, a description, a date, a timestamp, or an identifier associated with the fiber testing operation, and the trace data includes at least one of a loss measurement or an OTDR measurement associated with the fiber testing operation, as described above.

As further shown in Fig. 4, process 400 may include generating, using a machine learning operation and based on the data, a signature that identifies a fiber associated with the fiber testing operation (block 420). For example, the fiber testing system may generate, using a machine learning operation and based on the data, a signature that identifies a fiber associated with the fiber testing operation, as described above.

Process 400 may include additional implementations, such as any single implementation or any combination of implementations described below and/or in connection with one or more other processes described elsewhere herein.

In a first implementation, the signature that identifies the fiber is an invariant signature that identifies the fiber in accordance with the data being associated with a plurality of test conditions.

In a second implementation, alone or in combination with the first implementation, the signature that identifies the fiber has a dimensionality that satisfies at least one of a performance requirement, a latency requirement, or a storage requirement.

In a third implementation, alone or in combination with one or more of the first and second implementations, process 400 includes generating a machine learning model, and training the machine learning model using a fiber testing training dataset, wherein generating the signature using the machine learning operation comprises generating the signature using a machine learning operation that is performed by the machine learning model.

In a fourth implementation, alone or in combination with one or more of the first through third implementations, process 400 includes identifying, based on a similarity between the signature associated with the fiber testing operation and another signature associated with another fiber testing operation, that the signature and the other signature are associated with the same fiber.

In a fifth implementation, alone or in combination with one or more of the first through fourth implementations, process 400 includes deleting one or more fiber testing operation records based on a similarity between two or more fiber testing operation records of a plurality of fiber testing operation records.

In a sixth implementation, alone or in combination with one or more of the first through fifth implementations, process 400 includes processing a plurality of fiber testing operation records, identifying that a fiber testing operation record and another fiber testing operation record comprise repeated test records, wherein the other fiber resting operation record is included in the plurality of fiber testing operation records or is included in a plurality of stored fiber testing operation records, and deleting the fiber testing operation record based on the fiber testing operation record and the other fiber testing operation record being repeated test records.

In a seventh implementation, alone or in combination with one or more of the first through sixth implementations, process 400 includes training a machine learning model for generating the signature, and identifying, in real time and using the machine learning model, one or more repeated fiber testing operation records of a plurality of fiber testing operation records.

In an eighth implementation, alone or in combination with one or more of the first through seventh implementations, process 400 includes identifying a similarity between a first fiber testing operation record and a second fiber testing operation record based on a first signature associated with the first fiber testing operation record and a second signature associated with the second fiber testing operation record.

In a ninth implementation, alone or in combination with one or more of the first through eighth implementations, process 400 includes storing a plurality of signatures associated with a plurality of respective fiber testing operations, and identifying, based on the plurality of signatures, one or more signatures having one or more characteristics that are outside of a range of fiber testing operation characteristics.

In a tenth implementation, alone or in combination with one or more of the first through ninth implementations, generating the signature that identifies the fiber comprises generating the signature using an embedded processing device, a processing device that is integrated into another device, an edge device, or a server that is accessible via one or more interfaces.

In an eleventh implementation, alone or in combination with one or more of the first through tenth implementations, process 400 includes sending, to another device, a fiber testing operation result associated with the fiber testing operation.

In a twelfth implementation, alone or in combination with one or more of the first through eleventh implementations, process 400 includes analyzing a plurality of fiber testing operation records, and triggering a test process automation workflow based on detecting one or more anomalies, similarities, duplications, or outliers associated with the plurality of fiber testing operation records.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:
obtaining data associated with a fiber testing operation performed by a fiber testing device, wherein the data includes at least one of metadata or trace data associated with the fiber testing operation, wherein the metadata includes at least one of a context, a description, a date, a timestamp, or an identifier associated with the fiber testing operation, and the trace data includes at least one of a loss measurement or an optical time domain reflectometer, OTDR, measurement associated with the fiber testing operation; and
generating, based on the data, a signature that identifies a fiber associated with the fiber testing operation.

2. The method of claim 1,
wherein the signature that identifies the fiber is an invariant signature that identifies the fiber in accordance with the data being associated with a plurality of test conditions, and/or
wherein the signature that identifies the fiber has a dimensionality that satisfies at least one of a performance requirement, a latency requirement, or a storage requirement.

3. The method of any preceding claim, further comprising:
generating a machine learning model; and
training the machine learning model using a fiber testing training dataset, wherein generating the signature using the machine learning operation comprises generating the signature using a machine learning operation that is performed by the machine learning model.

4. The method of any preceding claim, further comprising identifying, based on a similarity between the signature associated with the fiber testing operation and another signature associated with another fiber testing operation, that the fiber testing operation and the other fiber testing operation are associated with the same fiber.

5. The method of any preceding claim, further comprising deleting one or more fiber testing operation records based on a similarity between two or more fiber testing operation records of a plurality of fiber testing operation records.

6. The method of any preceding claim, further comprising:
processing a plurality of fiber testing operation records;
identifying that a fiber testing operation record and another fiber testing operation record are repeated test records, wherein the other fiber testing operation record is included in the plurality of fiber testing operation records or is included in a plurality of stored fiber testing operation records; and
deleting the fiber testing operation record based on the fiber testing operation record and the other fiber testing operation record being the repeated test records.

7. The method of any preceding claim, further comprising:
training a machine learning model for generating the signature; and
identifying, in real time and using the machine learning model, one or more fiber testing operation records of a plurality of fiber testing operation records corresponding to a repeated test record.

8. The method of any preceding claim, further comprising identifying a similarity between a first fiber testing operation record and a second fiber testing operation record based on a first signature associated with the first fiber testing operation record and a second signature associated with the second fiber testing operation record.

9. The method of any preceding claim, further comprising:
storing a plurality of signatures associated with a plurality of respective fiber testing operations; and
identifying, based on the plurality of signatures, one or more signatures having one or more characteristics that are outside of a range of fiber testing operation characteristics.

10. The method of any preceding claim, wherein generating the signature that identifies the fiber comprises generating the signature using an embedded processing device, a processing device that is integrated into another device, an edge device, or a server that is accessible via one or more interfaces,
and optionally
wherein the method further comprises sending, to another device, a fiber testing operation result associated with the fiber testing operation,
and/or optionally wherein the method further comprises:
analyzing a plurality of fiber testing operation records; and
triggering a test process based on detecting one or more anomalies, similarities, repeated test records, or outliers associated with the plurality of fiber testing operation records.

11. A device for wireless communication, comprising:
one or more memories; and
one or more processors, coupled to the one or more memories, configured to cause the device to:
obtain data associated with a fiber testing operation, wherein the data includes at least one of metadata or trace data associated with the fiber testing operation, wherein the metadata includes at least one of a context, a description, a date, a timestamp, or an identifier associated with the fiber testing operation and the trace data includes at least one of a loss measurement or an optical time domain reflectometer, OTDR, measurement associated with the fiber testing operation; and
generate, based on the data, a signature that identifies a fiber associated with the fiber testing operation.

12. The device of claim 11,
wherein the signature that identifies the fiber has a dimensionality that satisfies at least one of a performance requirement, a latency requirement, or a storage requirement, and/or
wherein the signature that identifies the fiber is an invariant signature that identifies the fiber in accordance with the data being associated with a plurality of test conditions.

13. The device of claim 11 or claim 12, wherein the one or more processors are further configured to cause the device to delete one or more fiber testing operation records based on a similarity between two or more fiber testing operation records of a plurality of fiber testing operation records.

14. A non-transitory computer-readable medium storing a set of instructions for wireless communication, the set of instructions comprising:
one or more instructions that, when executed by one or more processors of a device, cause the device to:
obtain data associated with fiber testing operation, wherein the data includes at least one of metadata or trace data associated with the fiber testing operation, wherein the metadata includes at least one of a context, a description, a date, a timestamp, or an identifier associated with the fiber testing operation and the trace data includes at least one of a loss measurement or an optical time domain reflectometer, OTDR, measurement associated with the fiber testing operation; and
generate, based on the data, a signature that identifies a fiber associated with the fiber testing operation.

15. The non-transitory computer-readable medium of claim 14,
wherein the signature that identifies the fiber is an invariant signature that identifies the fiber in accordance with the data being associated with a plurality of test conditions, and/or
wherein the signature that identifies the fiber has a dimensionality that satisfies at least one of a performance requirement, a latency requirement, or a storage requirement.
